Europäisches Patentamt

(19) European Patent Office

Office européen des brevets

(11) Publication number: **0 136 137**
**A2**

## (12) EUROPEAN PATENT APPLICATION

(21) Application number: 84306281.1

(22) Date of filing: 13.09.84

(51) Int. Cl.⁴: **A 01 N 37/02,** A 01 N 37/06
// (A01N37/02, 37:02, 33:12, 33:04), (A01N37/06, 37:04, 33:12, 33:04)

(30) Priority: 16.09.83 GB 8324806

(43) Date of publication of application: 03.04.85 Bulletin 85/14

(84) Designated Contracting States: DE FR GB IT SE

(71) Applicant: BP Chemicals Limited, Belgrave House 76 Buckingham Palace Road, London, SW1W 0SU (GB)

(72) Inventor: Kirby, Peter Roland, Brookside Beguildy, Knighton Powys LD7 1HG Wales (GB)

(74) Representative: Krishnan, Suryanarayana Kalyana et al, c/o The British Petroleum Company plc Patents Division Chertsey Road, Sunbury-on-Thames Middlesex TW16 7LN (GB)

(54) Fungicidal compositions.

(57) This invention relates to a water-based fungicidal composition containing at least three components which are (a) a metal-ammonium complex of a $C_1$-$C_{10}$ carboxylic acid in which the metal is copper or zinc, (b) a salt of a tertiary alkyl primary amine with a $C_1$-$C_4$ monocarboxylic acid, and (c) a quaternary ammonium salt of a tertiary amine. The composition may be used (i) for protection of crops such as vines, coffee, tea, tobacco, peanuts, potatoes, apples, pears, cereals and hops against fungal diseases, (ii) as paint biocides, (iii) as wood preservatives, (iv) for sterilisation of masonry or fungus infected interior walls, (v) in damp proof and fire retardant compositions, (vi) to prevent mildew on fabrics and (vii) to counteract growth of algae and marine fouling.

EP 0 136 137 A2

1

# FUNGICIDAL COMPOSITIONS

The present invention relates to fungicidal compositions particularly suitable for use as wood preservatives.

Fungicidal compositions containing both organic and inorganic compounds are well known. Amongst the organic fungicides the most widely used, especially as wood preservatives, are tributyl tin oxide, pentachlorophenol and pentachlorophenol laurate, which are mainly used as solutions in organic solvents. The use of such compositions has environmental disadvantages, and the requirement for the use of organic solvents as a medium results in added cost, possible toxicity to the operatives handling the compositions, environmental pollution, phytotoxicity, and possible fire hazards.

Inorganic fungicides are used to a greater extent and include copper/chromium compounds often combined with arsenic. The arsenic-containing compounds have environmental disadvantages and are clearly unsuitable for treating plants against fungal infection in view of their known toxicity. Of the copper compounds copper naphthenate requires an organic solvent medium and is therefore unsuitable for the reasons stated above. Other copper compounds which are water-based are known to be fungicidal. For example, "Bordeaux Mixture", which is a suspension of a light blue gelatinous precipitate formed by the reaction of copper sulphate and calcium hydroxide, has been used as a spray for the control of downy mildew on grapes. A similar composition known as "Eau Celeste" replacing calcium hydroxide by ammonium hydroxide in the Bordeaux mixture has also been used. Recently, mixtures of copper oxychloride and dithiocarbamates have been used as vine fungicides. However, copper oxychloride is virtually insoluble in water, and its high density causes rapid settling of suspensions, which can lead to blockages of spraying equipment. Similarly, copper formate and copper propionate are only sparingly soluble in water. More recently, the use of compositions containing cuprammonium carboxylates has been suggested in our British Patent Specification Nos 1585967 and 2049430.

It is an object of the present invention to produce an aqueous composition containing a metal ammonium carboxylate which is soluble, sprayable and storable, suitable for use in fungicidal compositions and in addition is more active than compositions used hitherto.

Accordingly, the present invention is a water-based fungicidal composition comprising three components which are (a) a metal ammonium complex of a $C_1-C_{10}$ carboxylic acid wherein the metal is selected from copper and zinc, (b) a salt of a tertiary alkyl primary amine with a $C_1-C_4$ monocarboxylic acid and (c) a quaternary ammonium salt of a tertiary amine.

The metal ammonium complexes of the $C_1-C_{10}$ carboxylic acids forming component (a) may be prepared by reacting an acid ammonium salt of the carboxylic acid with a metal compound selected from cuprous oxide, cupric oxide, zinc oxide and a zinc or copper carboxylate of the same acid in the presence of aqueous ammonia. By the expression "acid ammonium salt" as used here and throughout the specification is meant salts in which two moles of the acid moiety are present per mole of the ammonium ion on a chemical equivalent basis. Thus, the acid ammonium salts are preferably one or more of ammonium di-formate, ammonium di-acetate and ammonium di-propionate. The product of the reaction between the acid ammonium salt and the metal compound in the presence of aqueous ammonia is, in the case of the copper complex, a dark blue aqueous solution containing the cuprammonium complex.

The carboxylic acid moieties in the metal ammonium complexes may be the same or different and may be derived from saturated or unsaturated carboxylic acids. Monocarboxylic acids, especially those containing 1 to 4 carbon atoms are preferred. Examples of such acids include formic acid, acetic acid, propionic acid, the isomeric butyric acids, acrylic acid, methacrylic acid and caprylic acids.

The tertiary alkyl primary amine salt forming component (b) is suitably derived from one or more amines of the formula:

$R-C(R_1)(R_2)-NH_2$ wherein

R is a hydrocarbon group containing 6 to 20 carbon atoms and may be a saturated, unsaturated or aromatic hydrocarbon group, and $R_1$ and $R_2$ are the same or different alkyl groups containing 1 to 4 carbon atoms and both are preferably methyl group.

The tertiary alkyl primary amine is preferably a mixture of amines each falling within the formula referred to above. A specific example of such a mixture of amines is that commonly known as cocodimethyl amine and contains as major components amines with alkyl chains varying in lengths from 8-18 carbon atoms. Typically, the cocodimethyl amine contains 7% $C_8$, 6.5% $C_{10}$, 53% $C_{12}$, 19% $C_{14}$, 8.5% $C_{16}$ and 6% $C_{18}$ alkyl groups.

The monocarboxylic acid moiety forming the salt with the tertiary alkyl primary amine is preferably derived from acetic acid or propionic acid.

The quaternary ammonium salt of a tertiary amine forming the component (c) in the compositions of the present invention suitably have the formula:

$N^+(R_3)(R_4)(R_5)(CH_2R_6)X^-$

wherein $R_3$, $R_4$ and $R5$ are the same or different alkyl groups containing 1 to 4 carbon atoms, preferably methyl groups, $R_6$ is an alkyl, aryl, alkaryl or aralkyl group containing 1 to 20 carbon atoms preferably 10 to 20 carbon atoms, and $X^-$ is an anion derived from an organic or an inorganic acid and is preferably a halide such as chloride.

The relative proportions by weight of the respective components (a), (b) and (c) in the compositions of the present invention are suitably in the range of 30-60:30-50:10-20, preferably from 40-50:35-45:12-18 respectively and are chosen from within these ranges such that together they make up a total of 100% active ingredients in the final composition.

Part, eg 0.5-10% w/w, of the component (a) may be replaced by a monocarboxylate of an alkali metal or alkaline earth metal such as calcium propionate without adversely affecting the fungicidal activity of the composition.

The compositions of the present invention find several uses especially as fungical compositions for the protection of substrates which may be crops such as vines, coffee, tea, tobacco, peanuts, potatoes, apples, pears, cereals and hops against fungal diseases caused for example, by Botrytis fabae, Plasmopara viticola, Phytophthora infestans and Exobasidium vexans. In addition they may be used for example, as paint biocides, as wood preservatives, particularly for pretreatment of fresh timber, seedboxes and pallets and for wood boring insect eradication, for masonry or fungus infected interior walls sterilisation, in damp proof and fire retardant compositions, as fungicides to prevent mildew on fabrics and to counteract growth of algae and marine fouling. Particularly, these compositions inhibit the growth of fungi such as Cladosporium herbarum which are responsible for the spoilage of paints, and Coniophora cerebella which causes wood decay.

For any of the above uses, the compositions may be used as a water-based suspension or as an aqueous solution. A water-based suspension is preferred if the compositions are used as a paint biocide. The aqueous solution may however contain other conventional additives capable of supplementing their activity such as free formic acid, propionic acid, formalin and bisulphites. The aqueous solutions may additionally contain wetting, spreading or sticking agents or may be emulsified with mineral oils where necessary. These agents, particularly when used for crop protection, are preferably of the anionic or non-ionic type.

A feature of the invention is that the use of a quaternary ammonium salt of a tertiary amine, ie component (c), enables the blend of the other two components namely (a) and (b) to be solubilised especially in an aqueous or aqueous alcoholic medium thereby giving rise to a homogeneous composition. Moreover, the preservation activity of the compositions of the present invention is twice as much as that of conventional compositions containing the same metal component, eg copper. The compositions are also more resistant to leaching from the substrates preserved when compared with similar proprietary compositions.

The compositions of the present invention are further illustrated with reference to the following Examples.

Examples

In all the Examples according to the present invention the preservative composition used had the following components by weight per cent.

Examples and Comparative Tests
Determination of Toxic Values against Wood-destroying Basidiomycete Fungi

Method : Miniature wood block tests

Materials Tested : 1) A mixture, hereafter known as compound "T$_3$", containing by weight:
40 per cent cocodimethyl amine propionate (10 per cent active ingredient)
45 per cent copper ammonium propionate/calcium propionate
(6.76 per cent copper)
15 per cent Dodecyl benzyl trimethylammonium chloride (50 per cent active ingredient)

2) A mixture of copper ammonium propionate and calcium propionate only, hereafter known as "T$_2$",

3) Copper ethylene diamine acetate, hereafter known as "T$_4$",

4) Copper ethanolamine acetate, hereafter known as "T$_5$",

5) Copper/chromium/arsenic hereafter known as "CCA",

6) Copper/chromium/boron hereafter known as "CCB", and

7) Copper naphthenate, hereafter known as "CuN".

Diluent : Deionised water

Wood Species:  Scots pine sapwood

Average Density:  0.465 g/cc

Test Fungi/Exposure System:  Coniophora puteana FPRL 11E –
soil/block test in jars

Coriolus versicolor FPRL 28A – agar/block test in petri dishes

Conditioning Period after Impregnation: 4 weeks slow drying to BS
6009 (EN 113)

Preconditioning: With and without leaching to BS 5761 Part II (EN
84)

Sterilisation: Propylene oxide

Duration of Exposure: 6 weeks

Toxic Values: See Table 1

Method

Test blocks of a susceptible wood species were impregnated with a range of concentrations of the materials under test.  After drying and sterilisation, the blocks were exposed to attack by Basidiomycetes in pure culture, to establish the toxic values of the material.

The experiments were concerned with the initial toxicity and the toxicity after leaching.

During preparation of the lower concentrations it was found necessary to add small quantities of ammonia to prevent precipitation during dilution.

Results

A summary of the toxic values is presented in Table 1.

The toxic values for compounds $T_3$ are compared with other copper containing fungicides in Table 2, (without leaching) and in Table 3 (after leaching).

As shown in Table 1 compound $T_3$ was equally effective against both C. puteana and C. versicolor without leaching and there was no detected loss of activity after leaching; indeed the toxic values against C. versicolor were actually lower than prior to leaching.

These results are very favourable in comparison with the already established copper containing preservatives (Table 2 and 3).

The tests without preconditioning (Table 2) $T_3$ were far more effective than $T_2$, $T_4$ or $T_5$ against <u>Coniophora puteana</u>. In terms of copper content alone, $T_3$ compared favourably with the three established preservatives. On the data available $T_3$ appeared about as effective as CCA/CCB but about 3 times more effective than copper naphthenate. It showed a similar level of activity against <u>Coriolus versicolor</u> to $T_2$, $T_4$, $T_5$ and the established preservatives.

After leaching (Table 3) $T_3$ showed a similar activity to CCA against <u>Coniophora puteana</u> and a better performance than T2, $T_4$, $T_5$ or CCB which all lose activity on leaching. It appeared slightly more active against <u>Coriolus versicolor</u> than $T_2$, $T_4$, T5 and the established preservatives.

Other experiments carried out to investigate activity against soft rot fungi using a soil burial technique showed compound $T_3$ to be equivalent in performance to that achieved by $T_2$, $T_4$ and $T_5$ but at a lower copper content. This, together with the very good results in the above Examples against Basidiomycete attack, suggests compound $T_3$ to be an effective fungicidal wood preservative.

Table 1

Summary of Toxic Values of T$_3$

| Test fungus | Preconditioning | Toxic Values | |
|---|---|---|---|
| | | Treating solution concentration % w/w Cu | Preservative loading kg/m$^3$ Cu |
| Coniophora puteana 11E | none | *-0.1 | *-0.807 |
| | leaching | *-0.1 | *-0.791 |
| Coriolus versicolor 28A | none | 0.01-0.1 | 0.082-0.773 |
| | leaching | 0.005-0.01 | 0.042-0.081 |

*no failing concentration established.

Table 2

Comparison of T₃ with other copper containing materials; no preconditioning (Scots pine sapwood)

| Preconditioning | Test fungus | Test method | Test material | Toxic values | | | |
|---|---|---|---|---|---|---|---|
| | | | | Test material | | Copper | |
| | | | | Treating solution concentration % w/w | Preservative loading kg/m³ | Treating solution concentration % w/w | Preservative loading kg/m³ |
| None | Coniophora puteana 11E | Miniature tests | T₃<br>T₂<br>T₄<br>T₅ | *–3.3<br>5.9–**<br>12.0–**<br>12.0–** | *–26.5<br>43.5–**<br>92.4–**<br>97.2–** | *–0.1<br>0.4–**<br>0.6–**<br>0.6–** | *–0.81<br>2.94–**<br>4.62–**<br>4.86–** |
| | | BS 838 | CCA<br>CCB<br>CuN | 0.25–0.5<br>0.2–0.4<br>4.0–6.0 | 1.8–3.7<br>1.35–2.83<br>20.2–28.6 | 0.02–0.04<br>0.02–0.04<br>0.32–0.48 | 0.13–0.27<br>0.13–0.28<br>1.62–2.29 |
| | Coriolus versicolor 28A | Miniature tests | T₃<br>T₂<br>T₄<br>T₅ | 0.33–3.3<br>*–1.5<br>*–0.2<br>0.2–0.6 | 2.70–25.4<br>*–10.9<br>*–1.6<br>1.4–4.8 | 0.01–0.1<br>*0.1<br>*–0.01<br>0.01–0.03 | 0.08–0.77<br>*–0.74<br>*–0.08<br>0.07–0.24 |
| | | BS 838 | CCA<br>CCB<br>CuN | 0.05–0.2(M)<br>0.2–0.4+<br>0.5–1.0 | 0.37–1.50 (M)<br>1.24–2.33+<br>2.0–4.0 | 0.005–0.02(M)<br>0.02–0.04+<br>0.04–0.08 | 0.035–0.14(M)<br>0.12–0.23+<br>0.17–0.33 |

```
 *  no failing concentration established
**  no effective concentration established
 +  results using beech (no data available with Scots pine)
 M  critical concentration affected by mould growth (a lower concentration may be effective)
CCA  copper/chrome/arsenic
CCB  copper/chrome/boron
CuN  copper naphthenate
```

Table 3

**Comparison of $T_3$ with other copper containing materials; after leaching (Scots pine sapwood)**

| Preconditioning | Test fungus | Test method | Test material | Toxic values | | | |
|---|---|---|---|---|---|---|---|
| | | | | Test material | | Copper | |
| | | | | Treating solution concentration % w/w | Preservative loading kg/m$^3$ | Treating solution concentration % w/w | Preservative loading kg/m$^3$ |
| Leaching | Coniophora puteana 11E | Miniature tests | $T_3$<br>$T_2$<br>$T_4$<br>$T_5$ | *–3.3<br>44.4–**<br>60.0–**<br>40.0–** | *–26.0<br>350.6–**<br>486.0–**<br>326.0–** | *–0.1<br>3.0–**<br>3.0–**<br>2.0–** | *–0.791<br>23.7 –**<br>24.3 –**<br>16.3 –** |
| | | BS 838 | CCA<br>CCB<br>CuN | 0.25–1.0(M)<br>5.0–**<br>na | 1.9–7.6(M)<br>37.06–**<br>na | 0.02–0.07 (M)<br>0.49–**<br>na | 0.14–0.55 (M)<br>3.65–**<br>na |
| | Coriolus versicolor 28E | Miniature tests | $T_3$<br>$T_2$<br>$T_4$<br>$T_5$ | 0.16–0.33<br>*–1.5<br>*–0.2<br>0.2–0.6 | 1.38–2.66<br>*–10.9<br>*–1.6<br>1.4–4.8 | 0.005–0.01<br>*0.1<br>*–0.01<br>0.01–0.03 | 0.042–0.081<br>*–0.74<br>*–0.08<br>0.08–0.24 |
| | | BS 838 | CCA<br>CCB<br>CuN | 0.1–0.4 (M)<br>0.25–0.63+<br>na | 0.71–2.90 (M)<br>1.41–3.85+<br>na | 0.01–0.04(M)<br>0.02–0.06+<br>na | 0.07–0.27(M)<br>0.14–0.38+<br>na |

  * no failing concentration established
 ** no effective concentration established
  + results using beech (no data available with Scots pine)
  M critical concentration affected by mould growth (a lower concentration may be effective)

claims:

1. A water-based fungicidal composition comprising three components which are (a) a metal-ammonium complex of a $C_1$-$C_{10}$ carboxylic acid wherein the metal is selected from copper and zinc, (b) a salt of a tertiary alkyl primary amine with a $C_1$-$C_4$ monocarboxylic acid, and (c) a quaternary ammonium salt of a tertiary amine.

2. A composition according to claim 1 wherein the carboxylic acid moieties in component (a) are the same or different and are derived from saturated or unsaturated monocarboxylic acids.

3. A composition according to claim 1 or 2 wherein the carboxylic acid moieties of component (a) are derived from $C_1$-$C_4$ monocarboxylic acids selected from formic acid, acetic acid, propionic acid, the isomeric butyric acids, acrylic acid, methacrylic acid and caprylic acids.

4. A composition according to any one of the preceding claims wherein the tertiary alkyl primary amine moiety in component (b) is derived from a one or more amines of the formula: $R-C(R_1)(R_2)-NH_2$ wherein R is a hydrocarbon group containing 6 to 20 carbon atoms and is a saturated, unsaturated or aromatic hydrocarbon group, and $R_1$ and $R_2$ are the same or different alkyl groups containing 1 to 4 carbon atoms.

5. A composition according to any one of the preceding claims wherein the component (b) is derived from cocodimethyl amine comprising a mixture of tertiary alkyl primary amines having 8-18 carbon atoms.

11

**6.** A composition according to any one of the preceding claims wherein the carboxylic acid moiety of component (b) is acetic acid or propionic acid.

**7.** A composition according to any one of the preceding claims wherein component (c) has the formula: $N^+(R_3)(R_4)(R_5)(CH_2R_6)X^-$ wherein $R_3$, $R_4$ and $R_5$ are the same or different alkyl groups containing 1 to 4 carbon atoms, $R_6$ is an alkyl, aryl, alkaryl or aralkyl group containing 1 to 20 carbon atoms and $X^-$ is an anion derived from an organic acid or an inorganic acid.

**8.** A composition according to claim 7 wherein $R_3$, $R_4$ and $R_5$ are methyl groups, $R_6$ is a group containing from 10 to 20 carbon atoms and the anion $X^-$ is a halide.

**9.** A composition according to any one of the preceding claims wherein the relative proportions by weight of the respective components (a), (b) and (c) are in the range of 30-60:30-50:10-20, and are chosen from within these ranges such that together they make up a total of 100% active ingredients in the composition.

**10.** A composition according to any one of the preceding claims whenever used (i) for protection of crops such as vines, coffee, tea, tobacco, peanuts, potatoes, apples, pears, cereals and hops against fungal diseases, (ii) as paint biocides, (iii) as wood preservatives, (iv) for sterilisation of masonry or fungus infected interior walls, (v) in damp proof and fire retardant compositions, (vi) to prevent mildew on fabrics and (vii) to counteract growth of algae and marine fouling.